# EUROPEAN PATENT APPLICATION

(11) **EP 4 757 021 A1**
(43) Date of publication of application: **10.06.2026**
(21) Application number: 24914487.4
(22) Date of filing: 03.12.2024
(51) Int. Cl.: H01M 50/188, H01M 50/184, H01M 50/179

(54) **TOP COVER ASSEMBLY, BATTERY CELL, AND BATTERY PACK**

(30) Priority: 30.09.2024 CN 202422411155 U
(71) Applicant: Eve Energy Co., Ltd., Huizhou, Guangdong 516006 (CN)
(72) Inventor: FAN, Chengwei, Huizhou, Guangdong 516006 (CN); LI, Guiping, Huizhou, Guangdong 516006 (CN); BU, Fang, Huizhou, Guangdong 516006 (CN); LI, Xixin, Huizhou, Guangdong 516006 (CN); HUANG, Binbin, Huizhou, Guangdong 516006 (CN)
(74) Representative: Berggren Oy
(86) International application number: PCT/CN2024/136268
(87) International publication number: WO 2026/065743

(57) **Abstract**

A top cover assembly, a battery cell, and a battery pack are provided in this application. The top cover assembly includes a cover plate, a terminal plate, and a sealant. A through hole is formed through the cover plate. The through hole is configured to be in communication with an interior of the battery cell. The terminal plate is installed on the cover plate and covers the through hole. A first overflow groove is formed in the terminal plate at a position corresponding to the through hole, and a groove opening of the first overflow groove faces the through hole. The sealant is interposed between the cover plate and the terminal plate, and the sealant is partially filled into the first overflow groove.

## Description

This application claims priority to Chinese Patent Application No. 202422411155.6, filed to the National Intellectual Property Administration of China on September 30, 2024, the entire contents of which are incorporated herein by reference.

### TECHNICAL FIELD

The present application relates to the field of battery technology, and in particular to a top cover assembly, a battery cell, and a battery pack.

### BACKGROUND

In related art, a battery cell includes an installation housing, a jelly roll, and a top cover assembly. An installation chamber and a top opening in communication with the installation chamber are formed at the installation housing. The jelly roll is installed in the installation chamber, and the top opening of the installation housing is covered by the top cover assembly to protect the jelly roll. The top cover assembly includes a cover plate and a terminal plate. The terminal plate is pressed and installed on the cover plate with a sealant. A through hole in communication with the installation chamber is formed through the cover plate to facilitate an electrical connection between the terminal plate and the jelly roll.

### SUMMARY

### TECHNICAL PROBLEM

However, when the terminal plate is pressed and installed on the cover plate with the sealant, the sealant is likely to overflow from the cover plate through the through hole of the cover plate, resulting in an increase in the total thickness of the top cover assembly, so that additional space inside the installation housing is occupied and the energy density of the battery cell is reduced.

### TECHNICAL SOLUTIONS

According to a first aspect, in possible embodiments of the present application, a top cover assembly is provided. The top cover assembly includes a cover plate, a terminal plate, and a sealant. A through hole is formed through the cover plate, and the through hole is configured to be in communication with an interior of the battery cell. The terminal plate is installed on the cover plate and covers the through hole. A first overflow groove is formed in the terminal plate at a position corresponding to the through hole, and a groove opening of the first overflow groove faces the through hole. The sealant is interposed between the cover plate and the terminal plate, and the sealant is partially filled into the first overflow groove.

According to a second aspect, in possible embodiments of the present application, a battery cell is provided. The battery cell includes an installation housing, a jelly roll, and the above mentioned top cover assembly. An installation chamber and an opening in communication with the installation chamber are formed in the installation housing. The jelly roll is installed in the installation chamber. The opening is covered by the cover plate. The terminal plate is electrically connected to the jelly roll at the through hole.

According to a third aspect, in an embodiment of the present application, a battery pack is provided. The battery pack includes the above described battery cell.

### BENEFICIAL EFFECTS

In the top cover assembly according to the present application, the first overflow groove is formed in the terminal plate at a position corresponding to the through hole of the cover plate, with a groove opening facing the through hole of the cover plate, so that the first overflow groove forms a space for the sealant to overflow in a direction away from the through hole. Once the terminal plate is pressed onto the cover plate with the sealant, the sealant is more likely to overflow toward the first overflow groove and partially filled into the first overflow groove, so that the sealant is less likely to overflow through the through hole of the cover plate, avoiding an increase in the total thickness of the top cover assembly after pressed, thereby preventing excessive space inside the installation housing from being occupied by the top cover assembly, and ensuring the energy density of the battery cell.

### BRIEF DESCRIPTION OF THE DRAWINGS

Figure 1 is a sectional view of a structure of the top cover assembly according to some possible embodiments of the present application.
Figure 2 is an exploded view of a structure of the top cover assembly shown in Figure 1.
Figure 3 is a sectional view of a structure of the terminal plate of the top cover assembly according to some possible embodiments of the present application.
Figure 4 is a sectional view of a structure of the top cover assembly before pressed according to some possible embodiments of the present application.
Figure 5 is a sectional view of a structure of the battery cell according to some possible embodiments of the present application.

Reference numerals in drawings are as follows:
100, top cover assembly; 10, cover plate; 11, through hole; 12, first outer peripheral edge; 13, second top surface; 14, second bottom surface; 15, folded portion; 20, terminal plate; 21, first overflow groove; 210, installation housing; 211, installation chamber; 212, opening; 22, first top surface; 220, jelly roll; 221, first electrode tab; 222, second electrode tab; 23, first bottom surface; 24, explosion proof area; 25, conductive connection area; 26, second overflow groove; 27, second outer peripheral edge; 28, connection protrusion; 30, sealant; 31, third outer peripheral edge.

### DETAILED DESCRIPTION OF THE PREFERRED EMBODIMENTS

In the description of the present application, unless otherwise explicitly specified or limited, the terms "connected," "coupled," and "fixed" should be interpreted in a broad way. For example, the connection may be a fixed connection, a detachable connection, or an integral structure. The connection may be a mechanical connection or an electrical connection. The connection may be a direct connection or an indirect connection via an intermediate medium. The connection may also refer to internal communication between two components or an interaction relationship between two components. For those skilled in the art, the specific meanings of the above terms in the present application can be understood in accordance with the specific context.

In the present application, unless otherwise explicitly specified or limited, when a first feature is described as being "above" or "below" a second feature, it may include a case where the first and second features are in direct contact, or a case where the first and second features are not in direct contact but are in contact through another feature therebetween. Moreover, the expressions "above," "over," and "on" used to describe the relative position of the first feature to the second feature may include both a case where the first feature is directly above or obliquely above the second feature, and a case where the first feature is merely at a higher horizontal elevation than the second feature. Similarly, the expressions "below," "under," and "beneath" may include both a case where the first feature is directly below or obliquely below the second feature, and a case where the first feature is merely at a lower horizontal elevation than the second feature.

In the description of the present embodiment, the terms such as "upper," "lower," "left," "right," "front," and "rear" are used based on the orientation or positional relationships shown in the drawings, and are intended only to facilitate description and simplify the operation, rather than to indicate or imply that the referred device or element must have a specific orientation or be constructed and operated in a specific orientation. Therefore, such expressions should not be construed as limitations to the present application. In addition, the terms "first" and "second" are used for descriptive purposes only and should not be construed as indicating or implying relative importance or a particular order.

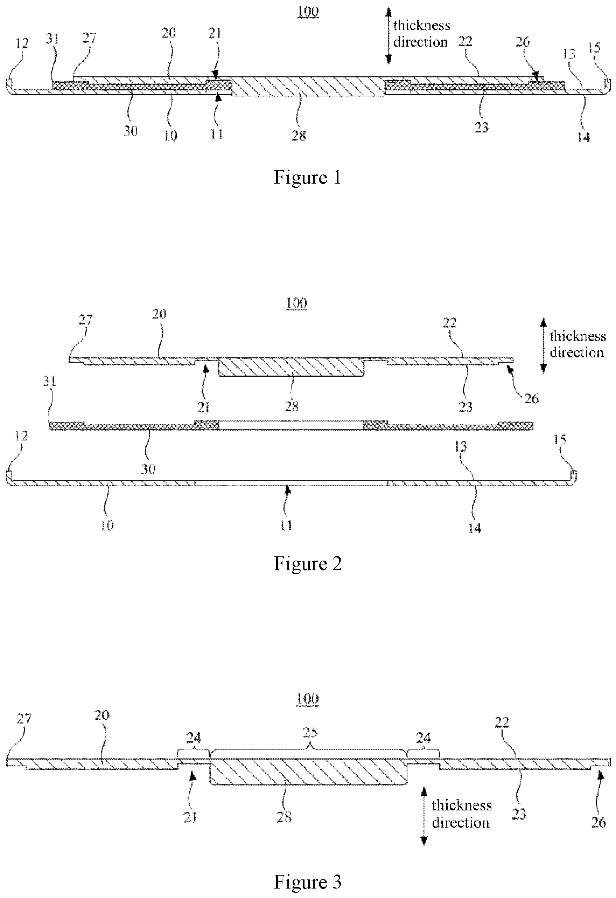

As shown in Figure 1, possible embodiments of the present application provide a top cover assembly 100. The top cover assembly 100 includes a cover plate 10, a terminal plate 20, and a sealant 30.

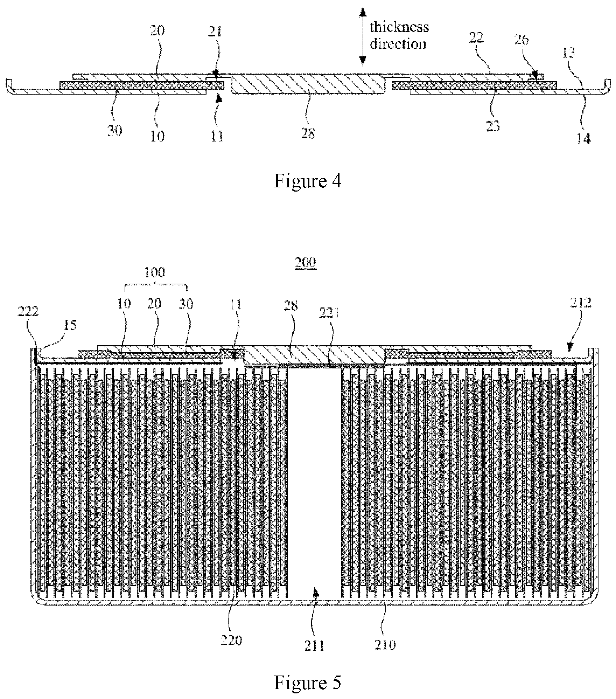

As shown in Figure 2, Figure 2 is an exploded view of a structure of the top cover assembly 100 shown in Figure 1. A through hole 11 is formed through the cover plate 10. The through hole 11 is configured to be in communication with an interior of the battery cell 200. In some embodiments, the top cover assembly 100 of the present application is applied to a cylindrical battery cell 200, and the cover plate 10 is circular in shape. The through hole 11 penetrates the cover plate 10 along a thickness direction of the cover plate 10. The through hole 11 is located at a centre position of the cover plate 10, so that the through hole 11 is arranged coaxially with the cover plate 10. As shown in Figure 5, once the top cover assembly 100 is applied to the battery cell 200, the cover plate 10 is installed at an opening 212 of an installation housing 210 to cover the opening 212 of the installation housing 210. The through hole 11 of the cover plate 10 is in communication with an installation chamber 211 inside the installation housing 210 to facilitate the electrical connection between a jelly roll 220 inside the installation chamber 211 and the terminal plate 20 installed on the cover plate 10.

Further, when the top cover assembly 100 needs to be applied to a prismatic battery cell 200 or a battery cell 200 in other shapes, the shape of the cover plate 10 may be adaptively designed. For example, the shape of the cover plate 10 may be adaptively designed as polygonal, elliptical, or others.

In addition, the through hole 11 is circular, square, or others in shape, as long as the electrical connection between the terminal plate 20 and tabs of the jelly roll 220 is facilitated. For example, in some embodiments, both the through hole 11 and the cover plate 10 are circular in shape, so as to adapt to the cylindrical battery cell 200.

It should be noted that the cover plate 10 is made of a conductive material to facilitate the electrical connection with the tabs of the jelly roll 220. Specifically, the cover plate 10 may be made of metal materials such as stainless steel, copper, iron, or aluminium alloy, or may be made of conductive non-metallic materials. Moreover, the cover plate 10 may be manufactured through stamping, turning, cutting, or other processes. In some embodiments, the forming process may be flexibly selected according to actual needs.

As shown in Figure 1, the terminal plate 20 is installed on the cover plate 10 and covers the through hole 11. A first overflow groove 21 is formed in the terminal plate 20 at a position corresponding to the through hole 11, with a groove opening of the first overflow groove 21 facing the through hole 11.

In some embodiments, the terminal plate 20 is made of a conductive material to facilitate the electrical connection with the tabs of the jelly roll 220. Specifically, the terminal plate 20 may be made of metal materials such as stainless steel, copper, iron, or aluminium alloy, or may be made of conductive non-metallic materials. In addition, the terminal plate 20 may be manufactured through stamping, turning, cutting, or other processes. In some embodiments, the forming process may be flexibly selected based on actual conditions.

During assembly, the terminal plate 20 is fixed to the cover plate 10, and an area of the terminal plate 20 is greater than an area of the through hole 11, so that the through hole 11 can be completely covered by the terminal plate 20 to ensure the sealing of the battery cell 200. In some embodiments, both the terminal plate 20 and the through hole 11 are circular in shape, and the terminal plate 20 is arranged coaxially with the through hole 11. Alternatively, the terminal plate 20 and the through hole 11 may also be configured in different shapes, as long as the through hole 11 of the cover plate 10 can be completely covered by the terminal plate 20.

Further, in some possible embodiments, the terminal plate 20 includes a first bottom surface 23 facing the cover plate 10. The first bottom surface 23 is recessed to form a first overflow groove 21 at a position corresponding to the through hole 11, with an opening of the first overflow groove 21 facing the through hole 11, so that the first overflow groove 21 forms a space for the sealant 30 to overflow in a direction away from the through hole 11, thereby preventing the sealant 30 from overflowing through the through hole 11.

In some embodiments, as shown in Figure 4, during the assembly of the top cover assembly 100, the sealant 30 is first interposed between the cover plate 10 and the terminal plate 20, the terminal plate 20 is pressed onto the sealant 30, and the sealant 30 is partially located between the first overflow groove 21 and the through hole 11. At this time, the sealant 30 is in a semi-solid state. Then, the terminal plate 20 is pressed onto the sealant 30 through hot pressing or cold pressing. At this time, the sealant 30 is deformed under pressure. The key is that since the terminal plate 20 is pressed downwards onto the sealant 30, and the first overflow groove 21 is arranged above the sealant 30 for overflow, the sealant 30 is more likely to overflow into the first overflow groove 21. As shown in Figure 1, after pressed, the sealant 30 is partially filled into the first overflow groove 21.

Therefore, in the present application, the first overflow groove 21 is formed in the terminal plate 20, and the first overflow groove 21 is formed at a position corresponding to the through hole 11 of the cover plate 10 with a groove opening of the first overflow groove 21 facing the through hole 11 of the cover plate 10, so that a space is formed by the first overflow groove 21 for the sealant 30 to overflow in a direction away from the through hole 11. Once the terminal plate 20 is pressed onto the cover plate 10 with the sealant 30, the sealant 30 is more likely to overflow into the first overflow groove 21 and is partially filled in the first overflow groove 21, so that the sealant 30 is less likely to overflow through the through hole 11 on the cover plate 10, avoiding an increase in the total thickness of the top cover assembly 100 after pressed, thereby preventing excessive space inside the installation housing 210 from being occupied by the top cover assembly 100, and ensuring the energy density of the battery cell 200.

In some possible embodiments, as shown in Figure 1, in the case that an inner peripheral wall of the through hole 11 is projected towards the terminal plate 20 along the thickness direction of the cover plate 10, a projection of the inner peripheral wall of the through hole 11 is located within the first overflow groove 21, or the projection of the inner peripheral wall of the through hole 11 coincides with an inner peripheral wall of the first overflow groove 21.

In some embodiments, an area of the first overflow groove 21 is configured to be greater than or equal to an area of the through hole 11, and the first overflow groove 21 is configured to completely cover the through hole 11, which ensures that when pressed, portions of the sealant 30 located above the through hole 11 are capable of overflowing into the first overflow groove 21, thereby ensuring that the sealant 30 is difficult to overflow into the through hole 11.

For example, in some embodiments, both the through hole 11 and the first overflow groove 21 are circular in shape, the through hole 11 is arranged coaxially with the first overflow groove 21, and an inner diameter of the first overflow groove 21 is greater than or equal to an inner diameter of the through hole 11. Therefore, in the case that the inner diameter of the first overflow groove 21 is greater than the inner diameter of the through hole 11, a projection of the inner peripheral wall of the through hole 11 is located within the first overflow groove 21; and in the case that the inner diameter of the first overflow groove 21 is equal to the inner diameter of the through hole 11, the projection of the inner peripheral wall of the through hole 11 coincides with the inner peripheral wall of the first overflow groove 21.

Alternatively, in other possible embodiments, both the through hole 11 and the first overflow groove 21 may be polygonal, elliptical, or others in shape, as long as the first overflow groove 21 is capable of completely covering the through hole 11.

In some possible embodiments, as shown in Figure 2, the terminal plate 20 includes a first top surface 22 and a first bottom surface 23 that are opposite to each other in a thickness direction of the terminal plate 20. The first bottom surface 23 faces the cover plate 10, and the first overflow groove 21 is recessed from the first bottom surface 23 towards the majority of the first top surface 22. A recessed depth of the first overflow groove 21 is greater than 0 mm and less than or equal to 0.98 mm. In some embodiments, the recessed depth may be 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 0.98 mm, etc.

It is understood that in the case that the recessed depth of the first overflow groove 21 is excessively large, a structural strength of the terminal plate 20 will be adversely affected. Therefore, the recessed depth of the first overflow groove 21 is controlled within 0.98 mm, so that sufficient space for the sealant 30 to overflow is provided, while the impact on the structural strength of the terminal plate 20 is avoided.

It should be noted that the recessed depth of the first overflow groove 21 needs to be measured from the first bottom surface 23 to a groove bottom of the first overflow groove 21 along the thickness direction of the terminal plate 20.

In some possible embodiments, as shown in Figure 3, an explosion proof area 24 is formed on the terminal plate 20 at a position corresponding to the first overflow groove 21. In some embodiments, in the case that the terminal plate 20 and the cover plate 10 are made of the same material, a thickness of the terminal plate 20 corresponding to the explosion proof area 24 is allowed to be smaller than a thickness of the cover plate 10 at any position, so that the explosion proof area 24 of the terminal plate 20 is more likely to be broken under high-pressure gas, thereby achieving an explosion-proof effect. Alternatively, the terminal plate 20 and the cover plate 10 may be made of different materials, and compared to the material of the cover plate 10, the material of the terminal plate 20 is more likely to be broken under high-pressure gas. In addition, since the first overflow groove 21 of the terminal plate 20 is located at a position corresponding to the through hole 11 on the cover plate 10, a part of the terminal plate 20 corresponding to the through hole 11 is structurally weaker, thereby forming an explosion proof area 24 that can be broken under high-pressure gas, achieving an explosion-proof effect.

In some possible embodiments, a conductive connection area 25 and the explosion proof area 24 are formed on the terminal plate 20 at positions corresponding to the first overflow groove 21. A connection protrusion 28 is formed at the conductive connection area 25, the connection protrusion 28 is extended from the groove bottom of the first overflow groove 21 towards the through hole 11 and is configured to be electrically connected to the jelly roll 220.

The explosion proof area 24 is annular in shape and is arranged surrounding the conductive connection area. The key is that a thickness of the terminal plate 20 corresponding to the explosion proof area 24 is less than a thickness of the cover plate 10 at any position, so that the explosion proof area 24 is allowed to be the weakest part of the entire top cover assembly 100. In the case that the pressure inside the battery cell 200 becomes excessively high, the explosion proof area 24 may be broken under the high-temperature and high-pressure gas inside the battery cell 200, so that the pressure inside the battery cell 200 is released, and explosion is avoided. Meanwhile, since the terminal plate 20 is broken at the explosion proof area 24, an electrical resistance of the entire circuit is increased to a near-short-circuit state, so that the exothermic reaction is blocked, and a further increase in the pressure inside the battery that could lead to a violent explosion is prevented, thus achieving safety and explosion-proof effects.

Therefore, in some possible embodiments, the explosion proof area 24 is directly arranged on the terminal plate 20 to achieve the explosion-proof effect, so that explosion-proof valves do not need to be arranged on the top cover assembly 100 at other positions, simplifying the structure of the top cover assembly 100 and reducing production costs.

In some possible embodiments, as shown in Figure 1, a surface of the terminal plate 20 facing the cover plate 10 (i.e., the first bottom surface 23) is further recessed to form a second overflow groove 26. The second overflow groove 26 is extended along an outer peripheral edge of the terminal plate 20, and the second overflow groove 26 is extended to the outer peripheral wall of the terminal plate 20. The sealant 30 is also partially filled into the second overflow groove 26.

In some embodiments, as shown in Figure 4, in the case that the second overflow groove 26 is formed at the outer peripheral edge of the terminal plate 20, once the terminal plate 20 is pressed downwards onto the sealant 30, the portion of the sealant 30 that is not covered by the terminal plate 20 will overflow upwards. Once a overflow volume is large, the height to which the sealant 30 overflows upwards may be higher than the first top surface 22 of the terminal plate 20, resulting in an increase in the total thickness of the top cover assembly 100.

However, in some possible embodiments, the second overflow groove 26 is formed at the outer peripheral edge of the terminal plate 20, as shown in Figure 4, once the terminal plate 20 is pressed downwards onto the sealant 30, the portion of the sealant 30 corresponding to the second overflow groove 26 will overflow upwards into the second overflow groove 26, thereby filling the second overflow groove 26. Therefore, the overflowing portion of the sealant 30 will be restricted in the second overflow groove 26, reducing the volume of sealant 30 overflowing outside the terminal plate 20, thereby the sealant 30 is less likely to overflow beyond the first top surface 22 of the terminal plate 20, and avoiding a situation where the total thickness of the completed top cover assembly 100 is greater than a preset total thickness. Additionally, the second overflow groove 26 also prevents changes in the volume of the sealant 30 overflowing outside the terminal plate 20.

In some possible embodiments, a recessed depth of the second overflow groove 26 is greater than 0 mm and less than or equal to 0.98 mm. In some embodiments, the recessed depth may be 0.08 mm, 0.1 mm, 0.18 mm, 0.2 mm, 0.28 mm, 0.3 mm, 0.38 mm, 0.4 mm, 0.48 mm, 0.8 mm, 0.88 mm, 0.6 mm, 0.68 mm, 0.7 mm, 0.78 mm, 0.8 mm, 0.88 mm, 0.9 mm, 0.98 mm, and so on.

It can be understood that in the case that the recessed depth of the second overflow groove 26 is excessively large, the structural strength of the terminal plate 20 will be adversely affected. Therefore, the recessed depth of the second overflow groove 26 is controlled within 0.98 mm, so that sufficient space for the sealant 30 to overflow is provided, while the impact on the structural strength of the terminal plate 20 is avoided.

It should be noted that the recessed depth of the second overflow groove 26 needs to be measured from the first bottom surface 23 to a groove bottom of the second overflow groove 26 along the thickness direction of the terminal plate 20.

In some possible embodiments, as shown in Figure 1, the cover plate 10 includes a first outer peripheral edge 12, the terminal plate 20 includes a second outer peripheral edge 27, and the sealant 30 includes a third outer peripheral edge 31. The third outer peripheral edge 31 is arranged between the first outer peripheral edge 12 and the second outer peripheral edge 27. Therefore, the outer peripheral edge of the sealant 30 is protruded from the outer peripheral edge of the terminal plate 20, so that a good insulation between the terminal plate 20 and the cover plate 10 is achieved, preventing short circuits between the terminal plate 20 and the cover plate 10 at their respective outer peripheral edges.

It should be noted that the shapes of the cover plate 10, the terminal plate 20, and the sealant 30 can be flexibly configured according to actual needs, as long as the third peripheral edge is arranged between the first peripheral edge and the second peripheral edge.

For example, in some embodiments, the cover plate 10, the terminal plate 20, and the sealant 30 are all circular in shape, and an outer diameter of the sealant 30 is greater than an outer diameter of the terminal plate and less than an outer diameter of the cover plate 10, so that the third peripheral edge is arranged between the first peripheral edge and the second peripheral edge.

Alternatively, the cover plate 10, the terminal plate 20, and the sealant 30 may also be similar in shape but of different sizes, such as polygonal, elliptical or others.

In some embodiments, as shown in Figure 1, a connection protrusion 28 is further formed to protrude from the first overflow groove 21 of the terminal plate 20. The connection protrusion 28 is configured to be electrically connected to the jelly roll 220 inside the battery cell 200. The sealant 30 is arranged to surround the connection protrusion 28, and an inner peripheral wall of the sealant 30 is arranged between the inner peripheral wall of the through hole 11 and an outer peripheral wall of the connection protrusion 28. It can be understood that not only can the overflow of the sealant 30 be accommodated in the first overflow groove 21, but also a position on the terminal plate 20 (i.e., the connection protrusion 28) arranged for the electrical connection with the jelly roll 220 can be ensured.

It should be noted that the inner peripheral wall of the sealant 30, the outer peripheral wall of the connection protrusion 28, and the inner peripheral wall of the through hole 11 may be circular, elliptical, polygonal, or others in shape, as long as the inner peripheral wall of the sealant 30 is arranged between the inner peripheral wall of the through hole 11 and the outer peripheral wall of the connection protrusion 28.

For example, in some embodiments, the sealant 30, the through hole 11, and the connection protrusion 28 are all circular in shape, and an inner diameter of the sealant 30 is greater than or equal to an outer diameter of the connection protrusion 28 and less than the inner diameter of the through hole 11. Therefore, it can be ensured that the inner peripheral wall of the sealant 30 is arranged between the inner peripheral wall of the through hole 11 and the outer peripheral wall of the connection protrusion 28.

In some embodiments, as shown in Figure 1, the connection protrusion 28 protrudes from the groove opening of the first overflow groove 21. Since the first overflow groove 21 is recessed from the first bottom surface 23 towards the first top surface 22 along the thickness direction of the terminal plate 20, the connection protrusion 28 protrudes from the groove opening of the first overflow groove 21, i.e., protrudes from the first bottom surface 23 of the terminal plate 20. It can be understood that the sealant 30 is prevented from overflowing to a lower surface of the connection protrusion 28, thereby avoiding the impact on the electrical connection between the connection protrusion 28 and the jelly roll 220.

In some embodiments, as shown in Figure 1, the terminal plate 20 includes a first top surface 22 and a first bottom surface 23 that are opposite to each other along the thickness direction of the terminal plate 20. The cover plate 10 includes a second top surface 13 and a second bottom surface 14 that are opposite to each other along the thickness direction of the cover plate 10. The sealant 30 is partially interposed between the first bottom surface 23 and the second top surface 13, and the sealant 30 does not go beyond the first top surface 22 and the first bottom surface 23. Therefore, a thickness dimension of the top cover assembly 100 is well controlled during the production of the top cover component 100, thereby avoiding changes in the thickness dimension of the top cover assembly 100 during production.

In some possible embodiments, the thickness of the cover plate 10 at any other positions than the position corresponding to the through hole 11 is greater than or equal to 0.05 mm and less than or equal to 1 mm. In some embodiments, the thickness may be 0.05 mm, 0.15 mm, 0.25 mm, 0.35 mm, 0.45 mm, 0.55 mm, 0.65 mm, 0.75 mm, 0.85 mm, 0.95 mm, 1 mm, and so on.

It can be understood that if the thickness of the cover plate 10 is excessively small, the structural strength of the cover plate 10 is too weak to provide sufficient protection; while if the thickness of the cover plate 10 is excessively large, the cover plate 10 is thick and heavy, which is adverse to the lightweight design of the battery cell 200.

Therefore, in some possible embodiments, the thickness of the cover plate 10 at any position is controlled within a range of 0.05 mm to 1 mm, which ensures the structural strength of the cover plate 10 and facilitate the lightweight design of the top cover assembly 100 and the battery cell 200.

In some possible embodiments, the thickness of the terminal plate 20 at any position is greater than or equal to 0.05 mm and less than or equal to 1 mm. In some embodiments, the thickness may be 0.05 mm, 0.1 mm, 0.2 mm, 0.3 mm, 0.4 mm, 0.5 mm, 0.6 mm, 0.7 mm, 0.8 mm, 0.9 mm, 1 mm, and so on.

It can be understood that if the thickness of the terminal plate 20 is excessively small, the structural strength of the terminal plate 20 is too weak to provide sufficient protection; while if the thickness of the terminal plate 20 is excessively large, the terminal plate 20 is thick and heavy, which is adverse to the lightweight design of the battery cell 200.

Therefore, in some possible embodiments, the thickness of the terminal plate 20 at any given position is controlled within a range of 0.05 mm to 1 mm, which ensures the structural strength of the terminal plate 20 and facilitate the lightweight design of the top cover assembly 100 and battery cell 200.

It should be noted that, since structures such as the first overflow groove 21, the second overflow groove 26, and the connection protrusion 28 are arranged at the terminal plate 20, the thickness of the terminal plate 20 may vary at different positions. For example, the thickness of the terminal plate 20 at the positions of the first and second overflow grooves may be relatively small, while the thickness of the terminal plate 20 at the connection protrusion 28 may be relatively large, as long as the thickness is controlled within the range of 0.05 mm to 1 mm.

According to the second aspect, as shown in Figure 5, possible embodiments of the present application provide a battery cell 200. The battery cell 200 includes an installation housing 210, a jelly roll 220, and a top cover assembly 100. An installation chamber 211 and an opening 212 in communication with the installation chamber 211 are formed in the installation housing 210. The jelly roll 220 is installed inside the installation chamber 211. The jelly roll 220 is mainly formed by winding positive electrode sheets, negative electrode sheets, and separators, and used as a component inducing an electrochemical reaction inside the battery cell 200. A detailed structure of the jelly roll 220 may refer to relevant technologies, and will not be further described herein. A detailed structure of the top cover assembly 100 refers to the aforementioned embodiments. The opening 212 is covered by the cover plate 10 of the top cover assembly 100, so that the installation chamber 211 is completely enclosed. The terminal plate 20 is electrically connected to the jelly roll 220 at the through hole 11.

It can be understood that since the battery cell 200 adopts all the technical solutions of all the possible embodiments, at least all the beneficial effects are brought by the technical solutions of the possible embodiments are achieved, which will not be further described herein.

In some embodiments, as shown in Figure 5, a first electrode tab 221 and a second electrode tab 222 are arranged on the jelly roll 220. One of the first electrode tab 221 and the second electrode tab 222 is a positive electrode tab, and the other is a negative electrode tab. The first electrode tab 221 is electrically connected to the terminal plate 20, while the second electrode tab 222 is interposed between an outer peripheral wall of the cover plate 10 and an inner peripheral wall of the installation chamber 211. The electrode tabs are electrically connected to the cover plate 10. Therefore, the jelly roll 220 can be connected to external circuits through the terminal plate 20 and the cover plate 10.

It can be understood that in some possible embodiments, the second electrode tab 222 is interposed between the outer peripheral wall of the cover plate 10 and the inner peripheral wall of the installation chamber 211, which can facilitate the electrical connection between the second electrode tab 222 and the cover plate 10 during the installation of the top cover assembly 100, simplifying the assembly process and thereby increasing production efficiency.

In some possible embodiments, as shown in Figure 5, a folded portion 15 is arranged at the outer peripheral edge of the cover plate 10. The folded portion 15 is folded upwards and is extended parallel to the inner peripheral wall of the installation chamber 211. The folded portion 15 is in contact with the inner peripheral wall of the installation chamber 211. The second electrode tab 222 is interposed between the folded portion 15 and the inner peripheral wall of the installation chamber 211.

It can be understood that in some possible embodiments, the folded portion 15 is arranged at the outer peripheral edge of the cover plate 10, so that a contact area between the cover plate 10 and the installation housing 210 can be increased through the folded portion 15, thereby enabling the installation of the top cover assembly 100 to the installation housing 210 more stable.

According to a third aspect, possible embodiments of the present application provide a battery pack (not shown). The battery pack includes the battery cell 200 of the possible embodiments, and the battery cell 200 includes the top cover assembly 100 of the possible embodiments. Since the battery pack adopts all the technical features of all the possible embodiments, at least all the beneficial effects are brought by the technical solutions of the possible embodiments are achieved, which will not be further described herein.

## Claims

1. A top cover assembly, comprising:
a cover plate, a through hole being formed through the cover plate, the through hole being configured to be in communication with an interior of a battery cell;
a terminal plate, installed on the cover plate and covering the through hole, a first overflow groove being formed in the terminal plate at a position corresponding to the through hole, and a groove opening of the first overflow groove facing the through hole; and
a sealant, interposed between the cover plate and the terminal plate, and the sealant being partially filled into the first overflow groove.

2. The top cover assembly according to claim 1, wherein in a case that an inner peripheral wall of the through hole is projected towards the terminal plate along a thickness direction of the cover plate, a projection of the inner peripheral wall of the through hole is located within the first overflow groove, or the projection of the inner peripheral wall of the through hole coincides with an inner peripheral wall of the first overflow groove.

3. The top cover assembly according to claim 1, wherein both the through hole and the first overflow groove are circular in shape, and an inner diameter of the first overflow groove is greater than or equal to an inner diameter of the through hole.

4. The top cover assembly according to claim 1, wherein the terminal plate comprises a first top surface and a first bottom surface opposite to each other in a thickness direction of the terminal plate, the first bottom surface faces the cover plate, the first overflow groove is recessed from the first bottom surface towards a majority of the first top surface, and a recessed depth of the first overflow groove is greater than 0 mm and less than or equal to 0.98 mm.

5. The top cover assembly according to claim 1, wherein an explosion proof area is formed on the terminal plate at a position corresponding to the first overflow groove.

6. The top cover assembly according to any one of claims 1 to 5, wherein a surface, facing the cover plate, of the terminal plate is further recessed to form a second overflow groove, the second overflow groove is extended along an outer peripheral edge of the terminal plate, the second overflow groove is extended to an outer peripheral wall of the terminal plate, and the sealant is further partially filled into the second overflow groove.

7. The top cover assembly according to claim 6, wherein a recessed depth of the second overflow groove is greater than 0 mm and less than or equal to 0.98 mm.

8. The top cover assembly according to any one of claims 1 to 7, wherein the cover plate includes a first outer peripheral edge, the terminal plate includes a second outer peripheral edge, and the sealant includes a third outer peripheral edge, the third outer peripheral edge is arranged between the first outer peripheral edge and the second outer peripheral edge; or
the cover plate, the terminal plate, and the sealant are all circular in shape, and an outer diameter of the sealant is greater than an outer diameter of the terminal plate and less than an outer diameter of the cover plate.

9. The top cover assembly according to claim 8, wherein a connection protrusion is further formed to protrude from the first overflow groove of the terminal plate, the connection protrusion is configured to be electrically connected to a jelly roll inside the battery cell, and the sealant is arranged to surround the connection protrusion;
an inner peripheral wall of the sealant is arranged between an inner peripheral wall of the through hole and an outer peripheral wall of the connection protrusion; or the sealant, the through hole, and the connection protrusion are all circular in shape, and an inner diameter of the sealant is greater than or equal to an outer diameter of the connection protrusion and less than an inner diameter of the through hole.

10. The top cover assembly according to claim 9, wherein the connection protrusion protrudes from the groove opening of the first overflow groove.

11. The top cover assembly according to any one of claim 10, wherein the terminal plate includes a first top surface and a first bottom surface opposite to each other in a thickness direction of the terminal plate, the cover plate includes a second top surface and a second bottom surface opposite to each other in a thickness direction of the cover plate, and the sealant is partially interposed between the first bottom surface and the second top surface, and the sealant does not go beyond the first top surface and the first bottom surface.

12. The top cover assembly according to any one of claims 1 to 11, wherein a thickness of the cover plate at any position is greater than or equal to 0.05 mm and less than or equal to 1 mm.

13. The top cover assembly according to any one of claims 1 to 12, wherein a thickness of the terminal plate at any position is greater than or equal to 0.05 mm and less than or equal to 1 mm.

14. A battery cell, comprising:
an installation housing, an installation chamber and an opening in communication with the installation chamber being formed therein;
a jelly roll installed in the installation chamber; and
the top cover assembly according to any one of claims 1 to 13, the cover plate covering the opening, and the terminal plate being electrically connected to the jelly roll at the through hole.

15. A battery pack, comprising the battery cell according to claim 14.
